# EUROPEAN PATENT SPECIFICATION

(11) **EP 0 953 070 B1**
(45) Date of publication and mention of the grant of the patent: **29.03.2006**
(21) Application number: 97913736.1
(22) Date of filing: 17.10.1997
(51) Int. Cl.: C25C 3/08, C04B 41/00

(54) **THE START-UP OF ALUMINIUM ELECTROWINNING CELLS**
START-UP VON ELEKTROZELLEN ZUR GEWINNUNG VON ALUMINIUM
DEMARRAGE DE CELLULES D'EXTRACTION ELECTROLYTIQUE DE L'ALUMINIUM

(30) Priority: 18.10.1996 WO PCT/US96/16643
(43) Date of publication of application: 03.11.1999
(73) Proprietor: MOLTECH Invent S.A., 1520 Luxembourg (LU)
(72) Inventor: DE NORA, Vittorio, Nassau (BS); SEKHAR, Jainagesh, A., Cincinnati, OH 45208 (US); DURUZ, Jean-Jacques, CH-1204 Geneva (CH); LIU, James, Jenq, Cincinnati, OH 45220 (US)
(74) Representative: Cronin, Brian Harold John
(86) International application number: PCT/US1997/019144
(87) International publication number: WO 1998/017843

(56) References cited:
- WO-A-93/25731
- WO-A-94/13861
- WO-A-94/24069
- WO-A-94/24337
- WO-A-94/28200
- US-A- 5 534 130

## Description

### Field of the Invention

The invention relates to the starting up of cells for the electrowinning of aluminium by the electrolysis of alumina in a cryolite-based melt, which cell comprises a conductive cell bottom on which, in use, aluminium is produced and forms a layer or pool atop which is the molten cryolite electrolyte. The invention is particularly but not exclusively concerned with the start up of such cells where the cathode surface is protected by an aluminium-wettable refractory coating.

### Background of the Invention

Aluminium is produced conventionally by the Hall-Héroult process, by the electrolysis of alumina dissolved in cryolite-based molten electrolytes at temperatures up to around 950°C. A Hall-Héroult reduction cell typically has a steel shell provided with an insulating lining of refractory material, which in turn has a lining of carbon which contacts the molten constituents. Conductor bars connected to the negative pole of a direct current source are embedded in the carbon cathode substrate forming the cell bottom floor. The cathode substrate is usually an anthracite based carbon lining made of prebaked cathode blocks, joined with a ramming mixture of anthracite, coke, and coal tar or resins.

In Hall-Héroult cells, a molten aluminium pool acts as the cathode. The carbon lining or cathode material has a useful life of three to eight years, or even less under adverse conditions. The deterioration of the cathode bottom is due to erosion and penetration of electrolyte and liquid aluminium as well as intercalation of sodium, which causes swelling and deformation of the cathode carbon blocks and ramming mix. In addition, the penetration of sodium species and other ingredients of cryolite or air leads to the formation of toxic compounds including cyanides.

When they are put into service, aluminium electrowinning cells must be preheated. When the cell has reached a sufficient temperature, molten cryolite electrolyte is added and the start-up is continued until the cell reaches an equilibrium operating condition.

One known cell start-up procedure comprises applying a layer of coke or similar conductive material to the cell bottom and passing an electric current via anodes and through the coke into the cell bottom to heat the cell by the Joule effect. Another known cell start-up procedure uses flame burners. In US Patent 4,405,433 (Payne), it has been suggested that refractory fibrous materials of aluminium silicate be placed over refractory hard metal cathode assemblies prior to preheating of the cathode assemblies.

US Patent 5,651,874 (Sekhar/de Nora) has proposed coating the carbon cell bottom with particulate refractory hard material in a colloidal carrier to produce a hard adherent aluminium-wettable surface coating. These aluminium-wettable refractory coatings have by far outperformed all previous attempts to use such materials to protect carbon cell bottoms.

To facilitate cell start up, in particular when using these improved coatings, it has already been proposed to place an aluminium sheet on top of the coating before preheating (see *Cathodes in Aluminium Electrolysis,* 2nd Edition, 1994, M. Sorlie and H. Oye, published by Aluminium Verlag, page 70). The purpose of this aluminium sheet was to avoid possible hot-spots due to uneven current distribution. Because of the high current densities employed and the need to ensure an even heat distribution, aluminium sheets with a thickness of 1 to 5 mm were used. This aluminium sheet melts during the start-up procedure and is integrated into the pool of product aluminium.

WO 94/13861 teaches to cover the carbonaceous cathode with platelets of a metal matrix composite containing TiB₂ and Al as protection during start-up of the cell.

However, it has been found that whereas use of such aluminium sheets has been effective in reducing hot-spots, they do not protect against oxidation of the cathode. The use of thick aluminium sheets has not addressed this problem.

### Summary of The Invention

It is therefore an object of the invention to provide a start-up procedure which is entirely reliable as regards the avoidance of any damage to the cathode surface by using a material which when applied to the cathode forms a thin and uniform protective layer.

Another object of the invention is to protect the cathode by covering it with a temporary protective material before preheating the cell. A further object of the invention is to provide a temporary protective material which is at least partially eliminated by the beginning of normal use of the cell, such that it does not contaminate the product aluminium with the temporary protective material.

The invention in particular relates to a method of protecting during the start-up procedure a cathode of a cell for the electrowinning of aluminium by the electrolysis of alumina dissolved in a fluoride-based melt such as cryolite, on which cathode, in use, aluminium is produced and forms a layer or pool. The start-up procedure comprises applying before, preheating the cell one or more start-up layers on the cathode surface.

The method of protection of the invention is characterized in that the start-up layer(s) form(s) a temporary protection against damage of chemical and/or mechanical origin to the cathode, this temporary protection being in intimate contact with the cathode surface and being at least partly eliminated before or during the initial normal operation of the cell. The temporary protection may either be "washed away" by normal operation of the cell or permanently integrated into the cathode surface.

In contrast to the prior art, the temporary protection remains in intimate contact with the cathode surface below a layer of molten aluminium during the cell start-up. When only a thick sheet of aluminium is applied on the cell bottom, the applied layer melts during start-up and is merely integrated to the pool of product aluminium without preventing melting electrolyte from attacking the aluminium-wettable coating.

For the purpose of this invention, start-up layers are obtained from the materials specified in claim 1.

Normally the cell bottom is made of carbonaceous material such as carbon blocks, The cathode mass can be made mainly of carbonaceous material, such as compacted powdered carbon, a carbon-based paste for example as described in U.S. Patent No. 5,362,366 (Sekhar et al), prebaked carbon blocks assembled together on the shell, or graphite blocks, plates or tiles.

It is also possible for the cathode to be made mainly of an electrically-conductive carbon-free material, of a composite material made of an electrically-conductive carbon-free material and an electrically non-conductive carbon-free material.

Such non-conductive carbon-free materials can be alumina, cryolite, or other refractory oxides, nitrides, carbides or combinations thereof and the conductive materials can be at least one metal from Groups IIA, IIB, IIIA, IIIB, IVB, VB and the Lanthanide series of the Periodic Table, in particular aluminium, titanium, zinc, magnesium, niobium, yttrium or cerium, and alloys and intermetallic compounds thereof.

The composite material's metal preferably has a melting point from 650°C to 970°C.

The composite material is advantageously a mass made of alumina and aluminium or an aluminium alloy, see U.S. Patent No. 4,650,552 (de Nora et al), or a mass made of alumina, titanium diboride and aluminium or an aluminium alloy.

The composite material can also be obtained by micropyretic reaction such as that utilizing, as reactants, TiO₂, B₂O₃ and Al.

The cathode can also be made of a combination of at least two materials from : at least one carbonaceous material as mentioned above; at least one electrically conductive non-carbon material; and at least one composite material of an electrically conductive material and an electrically non-conductive material, as mentioned above.

Advantageously the cathode surface is coated with an aluminium-wettable refractory material, such as a refractory hard metal boride. Particulate refractory hard metal boride may for instance be included in a colloidal carrier and then applied to the cathode surface, i.e. according to the teaching of the aforesaid US Patent 5,651,874 (Sekhar/de Nora).

When an aluminium foil is used as a start-up layer, the foil is preferably from 0.03 to 0.05 mm thick. Eventually, the foil may be oxidised during heating and incorporated (as alumina) into the cathode surface or into a coating of aluminium-wettable refractory material.

The protection involving aluminium foils is contrasted with the use of a thick aluminium sheet, known from the prior art, which helps to avoid possible hot-spots due to uneven current distribution. Thick sheets of aluminium cannot be in intimate contact with the cathode surface because of their poor malleability and therefore cannot sufficiently protect the cathode from fluid and/or gaseous attack during start-up. Such thick sheets of aluminium merely ensure a good current distribution to avoid hot-spots. In contrast, thin foils of aluminium intimately match the surface of the cathode which may be porous and protect the cathode from undesired attacks during preheating of the cell.

However, as explained below, it is possible to use a thick aluminium sheet in combination with a protective layer according to the invention, e.g. including aluminium foils.

As an alternative a metallization may be used in order to protect the cathode surface. The metallization, which can be intimately bonded to the cathode surface, combines chemical, mechanical and electrical properties useful for the start-up procedure. This type of start-up layer prevents damage to the cathode of chemical and/or mechanical origin and additionally, the good conductivity of the material may be advantageously used during the cell heating procedure when achieved by the Joule effect as described hereafter. Typical metals which may be used for a metallization are aluminium or nickel, iron, titanium, cobalt, chromium, vanadium, zirconium, hafnium, niobium, tantalum, molybdenum, cerium, copper as an alloy or intermetallic comprising aluminium.

The use of metallic paints obtained from metallic powder applied in an aqueous, non-aqueous liquid or in an aqueous liquid containing organics, in particular in a polymer, such as polyurethane, ethylene glycol, polyethylene glycol, resins, esters or waxes may be very convenient due to their good protective properties and the ease with which such a material may be applied on the surface of the cell bottom.

Generally, the constituents and the amount of the protective metallization will be chosen so that there is an adequate protection during cell start-up but no undesirable contamination of the aluminium produced. Such metallization may also assist wetting of a porous refractory surface with molten aluminium. The protective metallization will usually not remain permanently on the surface of the cathode or on an aluminium-wettable refractory coating, but will be either "washed away" or integrated into the aluminium-wettable coating by the time the cell reaches its normal steady state operation.

For instance an aluminium paint can be applied on the cell bottom and then covered with a plurality of foils of aluminium as described above.

Advantageously intermetallic compounds may be used to protect the cell bottom. , These compounds may comprise aluminium with a further material selected from nickel, iron, titanium, cobalt, chromium, zirconium or combinations thereof. Furthermore such a layer of intermetallic compound is advantageously formed by applying on top of the cell bottom a combination of either aluminium powder, sheet, mesh or porous body such as foam on top of a sheet, mesh or porous body of said further material, or vice-versa. Heating the two metals before or during preheating of the cell initiates a spontaneous reaction for the production of an intermetallic component. Normally, such a layer is then evacuated with the produced molten aluminium before or during the initial normal operation of the cell.

The use of NiAl or Ni₃Al as an intermetallic layer is particularly beneficial. For instance, NiAl is remarkably stable when exposed to heat, the melting point being at about 1600°C. Additionally it presents good mechanical characteristics.

Additionally, another type of protective start-up layer may be obtained at least partly from a boron-containing solution that forms a glassy layer. The boron solution can be made from boron oxide, boric acid or tetraboric acid in an aqueous, non-aqueous or aqueous containing organics solvent such as methanol, ethylene glycol, glycerine, water or mixtures thereof. Optionally, the solution may comprise particulate metal that enhances the conductivity of the layer. Good results were obtained where a mix of aluminium and optionally borides and/or carbides of metals from the group comprising aluminium, titanium, chromium, vanadium, zirconium, hafnium, niobium, tantalum, molybdenum and cerium were added to the solution. Application of a boron-containing layer covered with a plurality of aluminium foils was successfully tested as well.

Additionally a protective start-up layer may be obtained at least partly from a polymer or polymer precursor, such as polyurethane, ethylene glycol, polyethylene glycol, resins, esters or waxes. As described above, the electrical conductivity of such a layer may be enhanced by adding particulate conductive material, optionally mixed with borides and/or carbides.

A further alternative is to form an additional protective start-up layer from an aqueous and/or non-aqueous solution containing phosphates of aluminium, such as monoaluminium phosphate, aluminium phosphate, aluminium polyphosphate, aluminium metaphosphate and mixtures thereof, for instance dissolved in water. Such a protective start-up layer is advantageously covered with a plurality of foils of aluminium as described above.

When a protective start-up layer is obtained at least partially from a colloid solution, the colloid is preferably selected from colloidal alumina, silica, yttria, ceria, thoria, zirconia, magnesia, lithia, monoaluminium phosphate, cerium acetate or a mixture thereof. The colloid solution usually gels during preheating of the cell and protects the cathode and if present the aluminium-wettable refractory coating during this critical start-up phase. Optionally, the colloid from the start-up layer may be at least partially incorporated into the cathode surface or the aluminium-wettable coating.

Such a protective start-up layer advantageously contains a particulate conductor, such as particulate aluminium, nickel, iron, titanium, cobalt, chromium, zirconium, copper and combinations thereof, in order to improve the conductivity of the start-up layer and additionally to avoid uneven current distribution. Likewise, a protective start-up layer comprising colloidal alumina can be used in combination with at least one pliable foil of aluminium having a thickness of less than 0.1 mm. For instance one or more aluminium foils can be sandwiched with the colloidal alumina.

In all cases, protective material is either intimately merged or is in intimate contact with the porous surface of the aluminium-wettable refractory coating and may be partly (or wholly) permanently incorporated in this coating, or partly or wholly removed as the cell reaches its steady state operation.

Additives such as particulate aluminium, or borides and/or carbides may be added to any protective start-up layer described hereabove before preheating the cell. Such addition enhances the protective effect of the temporary protection. The borides and/or carbides may be selected from the following metals: aluminium, titanium, chromium, vanadium, zirconium, hafnium, niobium, tantalum, molybdenum and cerium.

Similarly, pliable foils or thick sheets of aluminium may be added on top of any protective start-up layer described hereabove.

In the method of the invention, heat can be generated in the conductive material to preheat the cell bottom by passing electric current via anodes and through conductive material such as resistor coke into the cell bottom to heat the cell by the Joule effect.

For this configuration the temporary protection preferably has good electrical conductivity. The conductivity of a layer may however be enhanced by adding conductive material as described above. For instance aluminium powder may be incorporated to a non-inherently conductive or poorly conductive material and therefore even thick layers of poorly conductive based material may be used for protecting the aluminium-wettable coating.

When this electrical resistance preheating is used, a relatively thick sheet or sheets of aluminium, usually from 1 to 5 mm thick, preferably 3 to 5 mm, can placed between each anode and the temporary protection, in particular on top of the temporary protection. This thick sheet of aluminium, as is known, serves to assist the distribution of the electrical current evenly, and hence avoid hot-spots.

Alternatively, the cell bottom can be flame preheated by burners providing precautions are taken to avoid direct contact of the flame with a thin protective start-up layer, e.g. by covering it with a layer of coke or other heat-conductive material. This method offers the advantage of not being dependent upon the electrical conductivity of the materials involved.

Another method to heat the cell during the start-up procedure, which is not dependent upon the material involved, involves radiation techniques. A light source may be used in order to transfer heat to the cell in form of light waves. The preferred emitted wavelengths correspond to the infrared spectrum. This technique offers the advantage of avoiding pollution of the cell with undesired elements as when using the flame or the carbon resistor technique.

Furthermore, the layer of coke or other conductive material can be mixed with and/or covered with a halide-based electrolyte having a point of fusion in the region 660°-760°C. Molten cryolite is added to the cell when the temperature of the cell exceeds the point of fusion of said halide-based electrolyte added to the conductive material. This halide-based electrolyte can be mixed with or covered with a layer of conductive material such as coke.

Optionally protective start-up layers may extend to cover other components, such as cell side walls. The protection may even extend above the level of the fluoride-based melt reached during normal use of the cell.

Several methods are available in order to apply protective start-up layers on the cell bottom. When the precursor of a layer is of liquid form various painting methods may be applicable such as using brushes, rollers or spraying techniques. In case of a metallization hot-spraying may be used to apply molten metal.

Vapour deposition techniques such as chemical vapour deposition (CVD) or physical vapour deposition (PVD) may be used, or plasma spraying. Chemical or electrodeposition may be advantageously used considering the electrolytic cell environment.

When a foil is included in the protective layer, such as an aluminium foil, it can be secured on the cell bottom using adhesive application or hot-pressing which gives good results in case of powdery precursors as well.

All these techniques for applying the temporary protection on the cell bottom may be advantageously done using an automatic device like an angular (cylindrical or SCARA) or a parallel type robot. Partly automated system may also be used.

The invention also relates to a method of electrowinning aluminium. The method comprises two steps namely a start-up procedure with a temporary protection as described hereabove followed by the production of aluminium.

### Brief Description of the Drawing

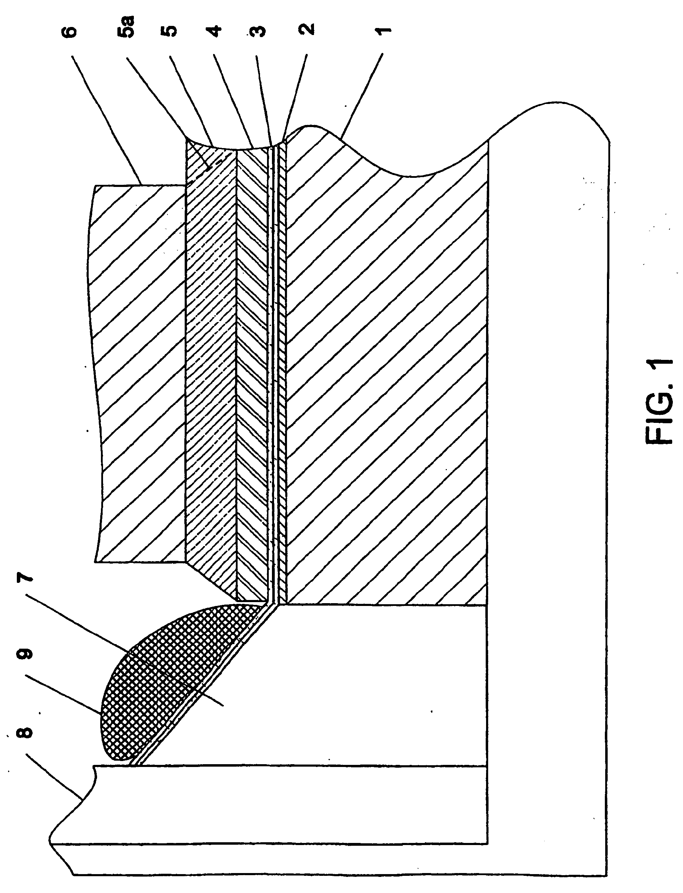

Figure 1 is a schematic view of part of a cell for the electrowinning of aluminium arranged for carrying out the start-up procedure of the present invention.

### Detailed Description

Figure 1 shows part of an aluminium electrowinning cell comprising a cathode cell bottom 1, for example carbon, coated with an aluminium-wettable refractory material 2, in particular a slurry-applied titanium diboride coating as described in US patent 5,651,874 (Sekhar/de Nora). The coating 2 is covered with a temporary protection 3, for example a couple of thin aluminium foils each having a thickness of 0.04 mm, against damage of chemical and/or mechanical origin to the aluminium-wettable coating 2 during the start-up procedure. Alternatively, other protective layers can be applied, for example those described in Examples II, III and V below. On the temporary protection 3 a thick sheet of aluminium 4 (i.e. having a thickness of 4 mm) is applied. The aluminium sheet 4 is covered with resistor coke 5 up to the bottom of the anode 6 which is facing the cathode. The resistor coke 5 may extend along the temporary protection or be confined under the anode 6 as indicated by the dashed line 5a. The temporary protection 3 extends up a wedge 7 connecting the cathode cell bottom 1 to the cell side wall 8 on which frozen alumina-containing cryolite 9 is located. The temporary protection 3 and the aluminium sheet 4 are shown out of proportion in Figure 1.

When current is passed from the anode 6 to the cathode 1 via the resistor coke 5 and the thick aluminium sheet 4 and aluminium foils 3 heat is generated mainly in the resistor coke 5. The thick aluminium sheet 4 helps to avoid hot-spots as described in the prior art. The heat generated in the resistor coke 5 enables first the aluminium sheet 4 and foils 3 and then the frozen cryolite 9 to melt and fill the cell. The presence of the thin foils of aluminium 3 which come into intimate contact with the aluminium-wettable coating 2 while preheating the cell prevents melting cryolite from coming into contact with the coating 2.

When molten cryolite fully covers the cell bottom up to the level of the anode bottom 6 electrolysis of alumina dissolved in the molten cryolite may begin. The evacuation of free elements originating from the thin foils of aluminium 3, the aluminium sheet 4 and the resistor coke 5 takes place before or during initial normal operation of the cell.

The feasibility of the invention has been demonstrated in the following laboratory tests:

### Example I (comparative)

In order to show the oxidation of TiB₂ into TiO₂ and B₂O₃, when applied in a colloid onto the cell bottom, the following laboratory test was carried out.

Platelets (about 20 x 40 x 3 mm) of an aluminium-wettable refractory coating material were prepared by slip casting of a slurry made of 14 ml of colloidal alumina, 12 ml of colloidal silica and 50g of TiB₂ powder on a porous plaster substrate.

One platelet was weighed, subjected to a heat treatment in air at 800°C for 15 hours in a box furnace and weighed again after cooling. Under these conditions, which simulate the oxidising conditions during cell-start-up the weight uptake resulting from oxidation of the TiB₂ components to form TiO₂ and B₂O₃ was 0.69 g or about 12% of total TiB₂ content.

### Example II

A similar procedure was carried out as in the previous example but with the TiB₂ coating protected by foils of aluminium.

A platelet as in Example I was wrapped in three layers of aluminium foil (0.02 mm thickness) and submitted to the same treatment as for the previous example. The weight uptake, taking into consideration the oxidation of the aluminium, was found to be 5 %, therefore demonstrating the efficiency of the protective layer against oxidation.

### Example III

In order to demonstrate the effectiveness of a protective layer originating from an aluminium paint the following test was carried out.

A platelet as in Example I was metallized on all its surface by spraying an aluminium powder (< 1 µm) in suspension in an organic carrier and synthetic resin three times, allowing each layer to dry at room temperature until a layer of about 80 - 100 µm was obtained. The coated sample was submitted to the same treatment as in the first example. The weight uptake, taking into consideration the oxidation of aluminium, was found to be 2%, therefore demonstrating the efficiency of the protective layer against oxidation.

### Example IV (outside the scope of claim 1)

Similarly, the following test was done with a polymer protective layer instead of the aluminium foils of the previous example.

A platelet as in Example I was coated on all its surface with polyurethane in an organic solvent applied by brushing on several layers, allowing each layer to dry, until a total layer thickness of 100 - 150 µm was obtained. The coated sample was submitted to the same heat treatment as for Example I. The weight uptake was found to be 3%, therefore demonstrating the efficiency of this protective layer against oxidation.

### Example V

Finally the efficiency of a combination of an aluminium foil and a polymer was tested in a similar way as in the preceding examples.

A platelet as in Example I was coated by brushing on all its surface with one layer of polyurethane in an organic solvent and an aluminium foil (0.06 mm thickness) was applied on top immediately after, so that the aluminium foil was firmly fixed after the polyurethane solution has dried out. The coated sample was submitted to the same heat treatment as for Example I. The weight uptake was found to be 0.5%, therefore demonstrating the efficiency of this protective layer against oxidation.

It will be understood that modifications may be made in the present invention. Thus, the scope of the present invention should be considered in terms of the following claims, and is understood not to be limited to the details of operation described in the specification.

## Claims

1. A method of starting-up a cell for the electrowinning of aluminium by the electrolysis of alumina dissolved in a fluoride-based melt such as cryolite, the cell comprising a cathode on which, in use, aluminium is produced and forms a layer or pool, said method comprising applying one or more aluminium-containing start-up layers on the cathode surface followed by preheating the cell, the aluminium-containing start-up layer(s) temporarily protecting the cathode surface during start-up,
**characterised in that** said aluminium-containing start-up layer(s) is/are applied to the cathode surface before cell start-up and comprise (s) at least one of:
- a pliable foil of aluminium having a thickness of less than 0.1 mm which during preheating the cell comes into and remains in intimate contact with the cathode surface and intimately matches said surface; and
- an aluminium-containing metallization which remains in intimate contact with the cathode surface during preheating the cell,
so as to temporarily protect the cathode against chemical attack by reaction with gases and/or fluids such as melting electrolyte during cell start-up.

2. The method of claim 1, wherein the start-up layer(s) on the cathode is/are eliminated by washing away the start-up layer(s) or permanently integrating at least part of the start-up layer(s) into the cathode surface by normal steady state operation of the cell.

3. The method of claim 1 or 2, wherein the cathode is made of carbonaceous material and/or electrically conductive carbon-free material, and optionally further contains electrically non-conductive carbon-free material.

4. The method of any preceding claim, comprising applying the start-up layer(s) on a coating of aluminium-wettable refractory material, in particular a refractory hard metal boride, such as a refractory hard metal boride applied in a colloidal carrier, forming the cathode surface.

5. The method of any preceding claim, comprising applying at least one pliable foil of aluminium having a thickness of less than 0.1 mm, in particular from 0.03 to 0-05 mm thick, onto the cathode surface.

6. The method of claim 5, wherein said pliable aluminium foil is at least partly oxidised and at least partly incorporated into the cathode surface as alumina.

7. The method of any preceding claim, comprising applying a metallization of aluminium or a metallization comprising at least one metal selected from nickel, iron, titanium, cobalt, chromium, vanadium, zirconium, hafnium, niobium, tantalum, molybdenum, cerium and copper, said at least one metal being present in an alloy comprising aluminium or in an intermetallic compound comprising aluminium.

8. The method of claim 7, wherein said metallization is obtained from metallic powder(s) applied in an aqueous or non-aqueous liquid, or in an aqueous liquid containing organics, in particular in a polymer, such as polyurethane, ethylene glycol, polyethylene glycol, resins, esters or waxes.

9. The method of claim 8, wherein the metallization is an intermetallic compound comprising aluminium and at least one further metal selected from nickel, iron, titanium, cobalt, chromium and zirconium, such as NiAl or Ni₃Al.

10. The method of claim 9, wherein said intermetallic compound is obtained by applying aluminium in the form of a powder, sheet, porous body or mesh onto a sheet, porous body or a mesh of said further metal, or vice-versa.

11. The method of any preceding claim, comprising applying at least one additional start-up layer on the cathode surface, said additional layer being obtained at least partly from a boron-containing solution forming a glassy layer, such as a solution containing boron oxide, boric acid or tetraboric acid, and in particular a solution comprising a boron compound dissolved in a solvent selected from methanol, ethylene glycol, glycerine, water and mixtures thereof.

12. The method of any preceding claim, comprising applying at least one additional start-up layer on the cathode surface, said additional layer being obtained at least partly from a polymer or a polymer precursor, such as a polymer selected from polyurethane, ethylene glycol, polyethylene glycol, resins, esters or waxes.

13. The method of any preceding claim, comprising applying at least one additional start-up layer on the cathode surface, said additional layer being obtained at least partly from a solution comprising phosphates of aluminium, in particular phosphates of aluminium selected from monoaluminium phosphate, aluminium phosphate, aluminium polyphosphate, aluminium metaphosphate and mixtures thereof.

14. The method of any preceding claim, comprising applying at least one additional start-up layer on the cathode surface, said additional layer being obtained at least partly from a colloid solution that gels during preheating, in particular a colloid selected from colloidal alumina, silica, yttria, ceria, thoria, zirconia, magnesia, lithia, monoaluminium phosphate, cerium acetate or mixtures thereof.

15. The method of claim 14, wherein the colloid solution comprises a particulate conductor, in particular a conductor selected from aluminium, nickel, iron, titanium, cobalt, chromium, zirconium, copper and combinations thereof.

16. The method of any preceding claim, comprising applying at least one start-up layer containing carbides and/or borides of metals, in particular of metals selected from the group comprising aluminium, titanium, chromium, vanadium, zirconium, hafnium, niobium, tantalum, molybdenum and cerium.

17. The method of any preceding claim, comprising applying at least one start-up layer containing particulate aluminium.

18. The method of any preceding claim, comprising applying at least one thick sheet of aluminium having a thickness of 1 to 5 mm on top of the start-up layer(s).

19. The method of any preceding claim, wherein each applied start-up layer is electrically conductive, the start-up layer(s) being covered with a layer of electrically conductive material, heat being generated by passing electric current via anodes, through the conductive material and the conductive start-up layer(s) into the cell bottom to heat the cell by the Joule effect.

20. The method of claim 19, wherein said conductive material contains coke.

21. The method of any one of claims 1 to 18, wherein the cell bottom is flame preheated by burners.

22. The method of any one of claims 1 to 18, wherein the cell bottom is preheated using infrared radiation.

23. The method of any one of claims 4 to 2.2 when depending on claim 4, wherein the aluminium-wettable refractory coating protected by at least one start-up layer is covered with a halide-based electrolyte having a point of fusion in the region 660°-760°C, said fluoride-based melt being added to the cell when the temperature of the cell exceeds the point of fusion of said halide-based electrolyte added to the conductive material.

24. The method of any preceding claim, wherein the or at least one start-up layer extends up the side walls of the cell.

25. The method of claim 24, wherein the or at least one start-up layer extends above the level of the fluoride-based melt during normal use of the cell.

26. The method of any preceding claim, wherein at least one start-up layer is applied before start-up as a metallization on the cathode surface using painting methods, such as brushes, rollers or spraying.

27. The method of any preceding claim, comprising applying before start-up at least one start-up layer as a metallization by hot-spraying molten metal.

28. The method of any preceding claim, comprising applying before start-up at least one start-up layer as a metallization by CVD, PVD, plasma spraying, electrodeposition, chemical deposition, adhesive application or hot-pressing.

29. The method of any preceding claim, comprising applying the or at least one start-up layer with an automated or a partly automated system.

30. A method of electrowinning aluminium comprising a cell start-up procedure as described in any preceding claim followed by producing aluminium by the electrolysis of alumina dissolved in a fluoride-based melt.

## Patentansprüche

1. Verfahren zur Inbetriebnahme einer Zelle für die elektrolytische Gewinnung von Aluminium durch Elektrolyse von Aluminiumoxid, das in einer Schmelze auf Fluoridbasis gelöst ist, wie etwa in Kryolith, wobei die Zelle eine Kathode aufweist, auf der im Betrieb Aluminium erzeugt wird und darauf eine Schicht oder eine Lache bildet, wobei das Verfahren die Aufbringung von einer oder mehreren Aluminium enthaltenden Inbetriebnahmeschicht(en) auf der Kathodenoberfläche gefolgt von einem Vorheizen der Zelle umfasst, wobei die Aluminium enthaltende(n) Schicht(en) die Kathodenoberfläche während der Inbetriebnahme zeitweise schützt(en),
**dadurch gekennzeichnet, dass** die Aluminium enthaltende(n) Inbetriebnahmeschicht(en) vor der Inbetriebnahme auf die Kathodenoberfläche aufgebracht wird(werden) und wenigstens eines aufweist(aufweisen) von:
eine flexible Aluminiumfolie mit einer Dicke von weniger als 0,1 mm, die während des Vorheizens der Zelle in engen Kontakt mit der Kathodenoberfläche kommt und bleibt und sich genau an die Oberfläche anpasst, und
eine Aluminium enthaltende Metallisierung, die in engen Kontakt mit der Kathodenoberfläche während des Vorheizens der Zelle bleibt,
um so die Kathode zeitweise gegen chemischen Angriff durch Reaktionen mit Gasen und/oder Flüssigkeiten, wie etwa geschmolzenem Elektrolyten, während der Inbetriebnahme der Zelle zu schützen.

2. Verfahren nach Anspruch 1, wobei die Inbetriebnahmeschicht(en) von der Kathode entfernt wird(werden), indem die Inbetriebnahmeschicht(en) abgewaschen wird(werden) oder wenigstens ein Teil der Inbetriebnahmeschicht (en) durch normalen gleichmäßigen Betrieb der Zelle in die Kathodenoberfläche integriert wird.

3. Verfahren nach Anspruch 1 oder. 2, wobei die Kathode aus kohlenstoffhaltigem Material und/oder elektrisch leitfähigem, kohlenstofffreien Material hergestellt ist und ferner optional elektrisch nicht leitfähiges kohlenstofffreies Material enthält.

4. Verfahren nach einem der vorhergehenden Ansprüche, bei dem die Inbetriebnahmeschicht(en) auf einer Beschichtung eines hitzebeständigen, aluminiumbenetzbaren Materials aufgebracht wird(werden), insbesondere auf einem hitzebeständigen Hartmetallborid, wie etwa einem hitzebeständigen Hartmetallborid, das auf einem Kolloidträger aufgebracht ist und die Kathodenoberfläche bildet.

5. Verfahren nach einem der vorhergehenden Ansprüche, bei dem wenigstens eine flexible Aluminiumfolie mit einer Dicke von weniger als 0,1 mm, insbesondere von 0,03 bis 0,05 mm Dicke, auf die Kathodenoberfläche aufgebracht wird.

6. Verfahren nach Anspruch 5, wobei die flexible Aluminiumfolie wenigstens teilweise oxidiert ist und wenigstens teilweise in die Kathodenoberfläche als Aluminiumoxid eingebracht ist.

7. Verfahren nach einem der vorhergehenden Ansprüche, bei dem eine Metallisierung aus Aluminium oder eine Metallisierung, die wenigstens ein Metall ausgewählt aus Nickel, Eisen, Titan, Kobald, Chrom, Vanadium, Zirkon, Hafnium, Niob, Tantal, Molybden, Cer und Kupfer ausgewählt ist, aufgebracht wird, wobei wenigstens ein Metall in einer Legierung mit Aluminium oder in einer intermetallischen Verbindung mit Aluminium vorhanden ist.

8. Verfahren nach Anspruch 7, wobei die Metallisierung aus Metallpulver(n) erhalten wird, die in einer wässrigen oder nicht wässrigen Flüssigkeit aufgebracht werden oder in einer wässrigen Flüssigkeit mit organischen Bestandteilen aufgebracht werden, insbesondere in einem Polymer, wie etwa Polyurethan, Ethylenglykol, Polyethylenglykol, Harze, Ester oder Paraffin.

9. Verfahren nach Anspruch 8, wobei die Metallisierung eine intermetallische Verbindung mit Aluminium und wenigstens einem weiteren Metall aufweist, das aus Nickel, Eisen, Titan, Kobald, Chrom und Zirkon ausgewählt ist, wie etwa Ni-Al oder Ni₃Al.

10. Verfahren nach Anspruch 9, wobei die intermetallische Verbindung durch Aufbringen von Aluminium in Form eines Pulvers, einer Schicht, eines porösen Körpers oder eines Geflechts auf eine Schicht, einen porösen Körper oder ein Geflecht des weiteren Metalls oder umgekehrt erfolgt.

11. Verfahren nach einem der vorhergehenden Ansprüche, bei dem wenigstens eine zusätzliche Inbetriebnahmeschicht auf die Kathodenoberfläche aufgebracht wird, wobei die zusätzliche Schicht wenigstens teilweise aus einer borhaltigen Lösung gebildet wird und eine glasartige Schicht bildet, wie etwa aus einer Lösung, die Boroxid, Borsäure oder Tetraborsäure enthält, und insbesondere aus einer Lösung, die eine Borverbindung aufweist, die in einem Lösungsmittel gelöst ist, das aus Methanol, Ethylenglykol, Glyzerin, Wasser und Gemischen daraus ausgewählt ist.

12. Verfahren nach einem der vorhergehenden Ansprüche, bei dem wenigstens eine zusätzliche Inbetriebnahmeschicht auf der Kathodenoberfläche aufgebracht wird, wobei die zusätzliche Schicht wenigstens teilweise aus einem Polymer oder einem Polymervorläufer erhalten wird, wie etwa einem Polymer, das aus Polyurethan, Ethylenglykol, Polyethylenglykol, Kunstharzen, Estern oder Paraffinen ausgewählt ist.

13. Verfahren nach einem der vorhergehenden Ansprüche, bei dem wenigstens eine zusätzliche Inbetriebnahmeschicht auf der Kathodenoberfläche aufgebracht wird, wobei die zusätzliche Schicht wenigstens teilweise aus einer Lösung erhalten wird, die Aluminiumphosphate enthält, insbesondere Aluminiumphosphate, die ausgewählt sind aus Monoaluminiumphosphat, Aluminiumphosphat, Aluminiumpolyphosphat, Aluminiummetaphosphat und Gemischen daraus.

14. Verfahren nach einem der vorhergehenden Ansprüche, bei dem wenigstens eine zusätzliche Inbetriebnahmeschicht auf der Kathodenfläche aufgebracht wird, wobei die zusätzliche Schicht wenigstens teilweise aus einer kolloidalen Lösung erhalten wird, die sich während des Vorheizens verfestigt, insbesondere aus einem Kolloid, das aus kolloidalem Aluminiumoxid, Siliziumdioxid, Yttriumoxid, Ceroxid, Thoriumoxid, Zirkuniumoxid, Magnesiumoxid, Lithiumoxid, Monoaluminiumphosphat, Cerazetat und Gemischen daraus ausgewählt ist.

15. Verfahren nach Anspruch 14, wobei die kolloidale Lösung teilchenförmiges leitfähiges Material aufweist, insbesondere leitfähiges Material, das aus Aluminium, Nickel, Eisen, Titan, Kobald, Chrom, Zirkon, Kupfer und Kombinationen daraus ausgewählt ist.

16. Verfahren nach einem der vorhergehenden Ansprüche, bei dem wenigstens eine Inbetriebnahmeschicht aufgebracht wird, die Metallkarbide und/oder -boride enthält, insbesondere von Metallen, die aus der Gruppe ausgewählt sind, die Aluminium, Titan, Chrom, Vanadium, Zirkon, Hafnium, Niob, Tantal, Molybden und Cer umfasst.

17. Verfahren nach einem der vorhergehenden Ansprüche, bei dem wenigstens eine Inbetriebnahmeschicht aufgebracht wird, die teilchenförmiges Aluminium enthält.

18. Verfahren nach einem der vorhergehenden Ansprüche, bei dem wenigstens eine dicke Lage aus Aluminium mit einer Dicke von 1 bis 5 mm oben auf der(den) Inbetriebnahmeschicht(en) aufgebracht wird.

19. Verfahren nach einem der vorhergehenden Ansprüche, bei dem jede aufgebrachte Inbetriebnahmeschicht elektrisch leitfähig ist, die Inbetriebnahmeschicht(en) mit einer Lage eines elektrisch leitfähigen Materials bedeckt ist(sind), wobei durch Hindurchleiten von elektrischem Strom über die Anoden durch das leitfähige Material und die leitfähige(n) Inbetriebnahmeschicht(en) in den Zellenboden Wärme erzeugt wird, um die Zelle durch Joulsche Wärme zu erwärmen.

20. Verfahren nach Anspruch 19, wobei das leitfähige Material Koks enthält.

21. Verfahren nach einem der Ansprüche 1 bis 18, wobei der Zellenboden mit Brennern durch Flammen vorgeheizt wird.

22. Verfahren nach einem der Ansprüche 1 bis 18, wobei der Zellenboden unter Verwendung Infrarotstrahlung vorgeheizt wird.

23. Verfahren nach einem der Ansprüche 4 bis 22, wenn abhängig von Anspruch 4, wobei die aluminiumbenetzbare, hitzebetändige Beschichtung, die von wenigstens einer Inbetriebnahmeschicht geschützt ist, mit einem Elektrolyten auf Halogenidbasis bedeckt ist, der einen Schmelzpunkt im Bereich von 660°-760°C hat, wobei die Schmelze auf Fluoridbasis in die Zelle eingefüllt wird, wenn die Temperatur der Zelle den Schmelzpunkt des Elektrolyten auf Halogenidbasis überschreitet, der dem leitfähigen Material hinzugefügt wird.

24. Verfahren nach einem der vorhergehenden Ansprüche, wobei die oder wenigstens eine Inbetriebnahmeschicht sich an den Seitenwänden der Zelle aufwärts erstreckt.

25. Verfahren nach Anspruch 24, wobei die oder wenigstens eine Inbetriebnahmeschicht während des Normalbetriebs der Zelle über den Spiegel der Schmelze auf Fluoridbasis hinausreicht.

26. Verfahren nach einem der vorhergehenden Ansprüche, wobei wenigstens eine Inbetriebnahmeschicht unter Anwendung von Streichverfahren als eine Metallisierung auf die Kathodenoberfläche aufgebracht wird, wie etwa durch Bürsten, Rollen oder Sprühen.

27. Verfahren nach einem der vorhergehenden Ansprüche, bei dem vor der Inbetriebnahme wenigstens eine Inbetriebnahmeschicht als Metallisierung durch Heißspritzen mit geschmolzenem Metall aufgebracht wird.

28. Verfahren nach einem der vorhergehenden Ansprüche, bei dem vor der Inbetriebnahme wenigstens eine Inbetriebnahmeschicht als Metallisierung durch CVD, PVD, Plasmasprühen, Elektroabscheidung, chemische Abscheidung, Aufkleben oder Heißpressen aufgebracht wird.

29. Verfahren nach einem der vorhergehenden Ansprüche, bei dem die oder wenigstens eine Inbetriebnahmeschicht mit einem automatisierten oder teilweise automatisierten System aufgebracht wird.

30. Verfahren zur elektrolytischen Gewinnung von Aluminium, bei dem eine Prozedur zur Inbetriebnahme der Zelle wie in einem der vorhergehenden Ansprüche beschrieben durchgeführt wird, gefolgt von der Erzeugung von Aluminium durch die Elektrolyse von Aluminiumoxid, das in einer Schmelze auf Fluoridbasis gelöst ist.

## Revendications

1. Procédé pour démarrer une cellule d'extraction électrolytique d'aluminium par l'électrolyse d'alumine dissoute dans une masse en fusion à base de fluorure telle que de la cryolite, la cellule comprenant une cathode sur laquelle, pendant l'utilisation, de l'aluminium est produit et forme une couche ou un bain, ledit procédé consistant à appliquer une ou plusieurs couches de démarrage contenant de l'aluminium sur la surface cathodique puis à préchauffer la cellule, la(les) couche(s) de démarrage contenant de l'aluminium protégeant temporairement la surface cathodique pendant le démarrage,
**caractérisé en ce que** ladite(lesdites) couche(s) de démarrage contenant de l'aluminium est/sont appliquées à la surface cathodique avant le démarrage de la cellule et comprend(comprennent) au moins l'une :
- d'une feuille pliable d'aluminium ayant une épaisseur inférieure à 0,1 mm qui, pendant le préchauffage de la cellule, vient en contact et reste en contact intime avec la surface cathodique et correspond intimement à ladite surface ; et
- d'une métallisation contenant de l'aluminium qui reste en contact intime avec la surface cathodique pendant le préchauffage de la cellule,
de façon à protéger temporairement la cathode contre l'attaque chimique par la réaction de gaz et/ou de fluides tels que de l'électrolyte fondu pendant le démarrage de la cuve.

2. Procédé de la revendication 1, dans lequel la(les) couche(s) de démarrage sur la cathode est/sont éliminées en enlevant par lavage la(les) couche(s) de démarrage ou en intégrant de façon permanente au moins une partie de la(les) couche(s) de démarrage dans la surface cathodique par un fonctionnement normal en régime permanent de la cellule.

3. Procédé de la revendication 1 ou 2, dans lequel la cathode est réalisée en un matériau carboné et/ou en un matériau électriquement conducteur sans carbone, et éventuellement contient de plus un matériau électriquement non conducteur sans carbone.

4. Procédé d'une quelconque revendication précédente, consistant à appliquer la(les) couche(s) de démarrage sur un revêtement en matériau réfractaire mouillable par l'aluminium, en particulier un borure métallique réfractaire dur, tel qu'un borure métallique réfractaire dur appliqué dans un support colloïdal, formant la surface cathodique.

5. Procédé d'une quelconque revendication précédente, consistant à appliquer au moins une feuille pliable d'aluminium ayant une épaisseur inférieure à 0,1 mm, en particulier de 0,03 à 0,05 mm d'épaisseur, sur la surface cathodique.

6. Procédé de la revendication 5, dans lequel ladite feuille d'aluminium pliable est au moins partiellement oxydée et au moins partiellement incorporée dans la surface cathodique comme alumine.

7. Procédé d'une quelconque revendication précédente, consistant à appliquer une métallisation d'aluminium ou une métallisation comprenant au moins un métal choisi parmi le nickel, le fer, le titane, le cobalt, le chrome, le vanadium, le zirconium, l'hafnium, le niobium, le tantale, le molybdène, le cérium et le cuivre, ledit au moins métal étant présent dans un alliage comprenant de l'aluminium ou dans un composé intermétallique comprenant de l'aluminium.

8. Procédé de la revendication 7, dans lequel ladite métallisation est obtenue à partir de poudre(s) métallique(s) appliquée(s) dans un liquide aqueux ou non aqueux, ou dans un liquide aqueux contenant des produits organiques, en particulier dans un polymère, comme du polyuréthane, de l'éthylèneglycol, du polyéthylèneglycol, des résines, des esters ou des cires.

9. Procédé de la revendication 8, dans lequel la métallisation est un composé intermétallique comprenant de l'aluminium et au moins un autre métal choisi parmi le nickel, le fer, le titane, le cobalt, le chrome et le zirconium, comme NiAl ou Ni₃Al.

10. Procédé de la revendication 9, dans lequel ledit composé intermétallique est obtenu en appliquant de l'aluminium sous la forme d'une poudre, d'une tôle, d'un corps poreux ou d'un élément maillé sur une tôle, un corps poreux ou un élément maillé dudit autre métal, ou réciproquement.

11. Procédé d'une quelconque revendication précédente, consistant à appliquer au moins une couche de démarrage supplémentaire sur la surface cathodique, ladite couche supplémentaire étant obtenue au moins partiellement à partir d'une solution contenant du bore formant une couche vitreuse, telle qu'une solution contenant de l'oxyde de bore, de l'acide borique ou de l'acide tétraborique, et en particulier une solution comprenant un composé de bore dissous dans un solvant choisi parmi le méthanol, l'éthylèneglycol, la glycérine, l'eau et des mélanges de ceux-ci.

12. Procédé d'une quelconque revendication précédente, consistant à appliquer au moins une couche de démarrage supplémentaire sur la surface cathodique, ladite couche supplémentaire étant obtenue au moins partiellement à partir d'un polymère ou d'un précurseur polymère, comme un polymère choisi parmi le polyuréthane, l'éthylèneglycol, le polyéthylèneglycol, des résines, des esters ou des cires.

13. Procédé d'une quelconque revendication précédente, consistant à appliquer au moins une couche de démarrage supplémentaire sur la surface cathodique, ladite couche supplémentaire étant obtenue au moins partiellement à partir d'une solution comprenant des phosphates d'aluminium, en particulier des phosphates d'aluminium choisis parmi du phosphate de monoaluminium, du phosphate d'aluminium, du polyphosphate d'aluminium, du métaphosphate d'aluminium et de mélanges de ceux-ci.

14. Procédé d'une quelconque revendication précédente, consistant à appliquer au moins une couche de démarrage supplémentaire sur la surface cathodique, ladite couche supplémentaire étant obtenue au moins partiellement à partir d'une solution colloïdale qui se gélifie pendant le préchauffage, en particulier un colloïde choisi à partir d'alumine, de silice, d'yttria, d'oxyde de cérium, de thorine, de zircone, de magnésie, de lithine, de phosphate de monoaluminium, d'acétate de cérium colloïdaux ou de mélanges de ceux-ci.

15. Procédé de la revendication 14, dans lequel la solution colloïdale comprend un conducteur particulaire, en particulier un conducteur choisi parmi l'aluminium, le nickel, le fer, le titane, le cobalt, le chrome, le zirconium, le cuivre et des combinaisons de ceux-ci.

16. Procédé d'une quelconque revendication précédente, consistant à appliquer au moins une couche de démarrage contenant des carbures et/ou des borures de métaux, en particulier de métaux choisis parmi le groupe comprenant l'aluminium, le titane, le chrome, le vanadium, le zirconium, l'hafnium, le niobium, le tantale, le molybdène et le cérium.

17. Procédé d'une quelconque revendication précédente, consistant à appliquer au moins une couche de démarrage contenant de l'aluminium particulaire.

18. Procédé d'une quelconque revendication précédente, consistant à appliquer au moins une tôle épaisse d'aluminium ayant une épaisseur de 1 à 5 mm au-dessus de la (des) couche(s) de démarrage.

19. Procédé d'une quelconque revendication précédente, dans lequel chaque couche de démarrage appliquée est électriquement conductrice, la(les) couche(s) de démarrage étant recouverte(s) d'une couche de matériau électriquement conducteur, la chaleur étant engendrée en faisant passer un courant électrique via des anodes, par l'intermédiaire du matériau conducteur et de la (des) couche(s) de démarrage conductrice(s) dans le fond de la cellule pour chauffer la cellule par l'effet Joule.

20. Procédé de la revendication 19, dans lequel ledit matériau conducteur contient du coke.

21. Procédé d'une quelconque des revendications 1 à 18, dans lequel le fond de la cellule est préchauffé par flamme par des brûleurs.

22. Procédé d'une quelconque des revendications 1 à 18, dans lequel le fond de la cellule est préchauffé en utilisant un rayonnement infrarouge.

23. Procédé d'une quelconque des revendications 4 à 22 quand elle dépend de la revendication 4, dans lequel le revêtement réfractaire mouillable par l'aluminium protégé par au moins une couche de démarrage est recouvert d'un électrolyte à base d'halogénure ayant un point de fusion dans la zone de 660°-760°C, ladite masse en fusion à base de fluorure étant ajoutée à la cellule quand la température de la cellule dépasse le point de fusion dudit électrolyte à base d'halogénure ajourée au matériau conducteur.

24. Procédé d'une quelconque revendication précédente, dans lequel la ou au moins une couche de démarrage se prolonge aux parois latérales de la cellule.

25. Procédé de la revendication 24, dans lequel la ou au moins une couche de démarrage se prolonge au-dessus du niveau de la masse en fusion à base de fluorure pendant l'utilisation normale de la cellule.

26. Procédé d'une quelconque revendication précédente, dans lequel au moins une couche de démarrage est appliquée avant le démarrage en tant que métallisation sur la surface cathodique en utilisant des procédés de peinture, tels que des brosses, des rouleaux ou par pulvérisation.

27. Procédé d'une quelconque revendication précédente, consistant à appliquer, avant le démarrage, au moins une couche de démarrage en tant que métallisation par un métal fondu par projection à chaud.

28. Procédé d'une quelconque revendication précédente, consistant à appliquer, avant le démarrage, au moins une couche de démarrage en tant que métallisation par dépôt chimique en phase vapeur CVD, dépôt physique en phase vapeur PVD, projection au plasma, dépôt électrolytique, dépôt chimique, application d'adhésif ou pressage à chaud.

29. Procédé d'une quelconque revendication précédente, consistant à appliquer la ou au moins une couche de démarrage avec un système automatisé ou partiellement automatisé.

30. Procédé d'extraction électrolytique d'aluminium comprenant une procédure de démarrage de la cellule telle que décrite dans une quelconque revendication précédente suivie par la production d'aluminium par l'électrolyse d'alumine dissoute dans une masse en fusion à base de fluorure.
